# EUROPÄISCHE PATENTANMELDUNG

(11) **EP 2 633 891 A1**
(43) Veröffentlichungstag der Anmeldung: **04.09.2013**
(21) Anmeldenummer: 13000853.5
(22) Anmeldetag: 20.02.2013
(51) Int. Cl.: B01D 25/21, B01D 25/30

(54) **Filterplatte und Verfahren zum Filtrieren einer Suspension**

(30) Priorität: 28.02.2012 AT 2442012
(71) Anmelder: Andritz Technology and Asset Management GmbH, 8045 Graz (AT)
(72) Erfinder: Bonn, Heinz, 52372 Kreuzau-Winden (DE); Ohorn, Peter, 89195 Staig (DE)
(74) Vertreter: Schweinzer, Friedrich

(57) **Zusammenfassung**

Die Erfindung betrifft eine Filterplatte (1) mit mindestens einem Füllschuh (2, 2'). Sie ist erfindungsgemäß dadurch gekennzeichnet, dass der Füllschuh (2, 2') einen Antrieb (4, 7, 18) aufweist. Weiters betrifft die Erfindung ein Verfahren zum Filtern einer Suspension die durch mindestens einen Füllschuh (2, 2') in mindestens eine Filterkammer, die zwischen einer Filterplatte und einer Gegenplatte einer Filtervorrichtung gebildet ist, eingeleitet wird und auf einem Filtertuch (8) auf der Filterplatte (1) ein Filterkuchen gebildet wird, wobei die Filtervorrichtung geöffnet wird und wobei anschließend der mindestens eine Füllschuh (2, 2') mittels des Antriebs (4, 7, 18) vom Filtertuch (8) abgehoben und das Filtertuch (8) weitertransportiert wird. Durch die Verwendung eines Antriebs für die Bewegung des Füllschuhs kann der Zeitpunkt des Abhebens vom Filtertuch so gewählt werden, dass keine Beschädigung des Füllschuhs auftritt und es kann bei entsprechenden zu filtrierenden Produkten auch die Klemmung des Filtertuchs nur nach zwei oder mehreren Filtrationszyklen aufgehoben und das Filtertuch weiter transportiert werden.

## Beschreibung

Die Erfindung betrifft eine Filterplatte mit mindestens einem Füllschuh und eine Filtervorrichtung mit mehreren Filterplatten sowie ein Verfahren zum Filtern einer Suspension die durch mindestens einen Füllschuh in mindestens eine Filterkammer, die zwischen einer Filterplatte und einer Gegenplatte einer Filtervorrichtung gebildet ist, eingeleitet wird und auf einem Filtertuch auf der Filterplatte ein Filterkuchen gebildet wird.

Derartige Vorrichtungen und Verfahren sind z.B. aus der DE 10 2007 027 032 B3 bekannt. Beim Öffnen der Filtervorrichtung werden dort die Füllschuhe durch elastische Dichtungen, die als Federn wirken, von der Filterplatte abgehoben, wobei sie die Klemmung des Filtertuches aufheben. Durch das Abheben der Füllschuhe während des Öffnens besteht die Gefahr, dass Teile des Filterkuchens auf den Füllschuh fallen und diesen beschädigen können. Weiters können Teile des Filterkuchens auf die Stellen des Filtertuches gelangen, die anschließend abgedichtet werden sollen und so zu Undichtigkeiten führen. Außerdem kann das Filtertuch durch das häufige Klemmen an einer Stelle dort zu Brüchen führen.

Die Erfindung soll nun eine Filterplatte und eine Filtereinrichtung schaffen, die eine gute Zuverlässigkeit und einen störungsfreien Betrieb ermöglicht.

Die Erfindung ist daher **dadurch gekennzeichnet, dass** der Füllschuh einen Antrieb aufweist. Mit einem Antrieb kann der Füllschuh zu einem gewünschten Zeitpunkt von der Filterplatte abgehoben werden, so dass dies auch nach vollständiger Entleerung der Filterkammer bzw. weitestgehend vollständiger Entfernung des Filterkuchens vom Filtertuch erfolgen kann und somit eine Beschädigung des Füllschuhs durch Filterkuchen verhindert wird. Auch muss der Füllschuh nicht bei jedem Filtrationszyklus abgehoben werden, was eine Verringerung der Beanspruchung des Filtertuches an der Klemmstelle und damit auch längere Nutzungsdauer des Filtertuches ergibt.

Eine vorteilhafte Weiterbildung der Erfindung ist **dadurch gekennzeichnet, dass** der Antrieb als Stellmotor oder Stellzylinder ausgebildet ist.

Eine günstige Ausgestaltung der Erfindung ist **dadurch gekennzeichnet, dass** der Antrieb als mechanischer Hebel ausgeführt ist.

Eine günstige Weiterbildung ist **dadurch gekennzeichnet, dass** mehrere Filterplatten mit Hebeln vorgesehen sind, wobei die Hebel der Filterplatten mit einem Seilzug, einer Kette oder einer funktionsgleichen Vorrichtung miteinander verbunden sind.

Eine vorteilhafte Ausgestaltung der Erfindung ist **dadurch gekennzeichnet, dass** der Seilzug bzw. die Kette an einem Ende mit einer Zugvorrichtung verbunden sind, wobei die Zugvorrichtung vorzugsweise ein Zylinder mit Arbeitsfluid, beispielsweise Pneumatik- oder Hydraulikzylinder ist.

Die Erfindung betrifft auch ein Verfahren zum Filtern einer Suspension die durch mindestens einen Füllschuh in mindestens eine Filterkammer, die zwischen einer Filterplatte und einer Gegenplatte einer Filtervorrichtung gebildet ist, eingeleitet wird und auf einem Filtertuch auf der Filterplatte ein Filterkuchen gebildet wird. Sie ist **dadurch gekennzeichnet, dass** die Filtervorrichtung geöffnet wird, wobei anschließend der mindestens eine Füllschuh mittels eines Antriebs vom Filtertuch abgehoben und das Filtertuch weitertransportiert wird.

Eine günstige Weiterbildung der Erfindung ist **dadurch gekennzeichnet, dass** die Filtervorrichtung komplett auseinandergezogen und geleert wird und anschließend die Füllschuhe mittels einer Zugvorrichtung gemeinsam vom Filtertuch abgehoben werden, wobei vorzugsweise die Zugvorrichtung entlastet wird, sobald die Tuchbewegung beendet ist.

Eine vorteilhafte Weiterbildung der Erfindung ist **dadurch gekennzeichnet, dass** die Füllschuhe vor dem Schließen der Filtervorrichtung beispielsweise durch eine mechanische Kraft, beispielsweise Feder, Zylinder, Stellmotor, in Richtung Filtertuch geführt werden.

Eine günstige Ausgestaltung der Erfindung ist **dadurch gekennzeichnet, dass** durch die zufahrenden Filterelemente die Füllschuhe in Vertiefungen gedrückt werden und damit das Filtertuch klemmen.

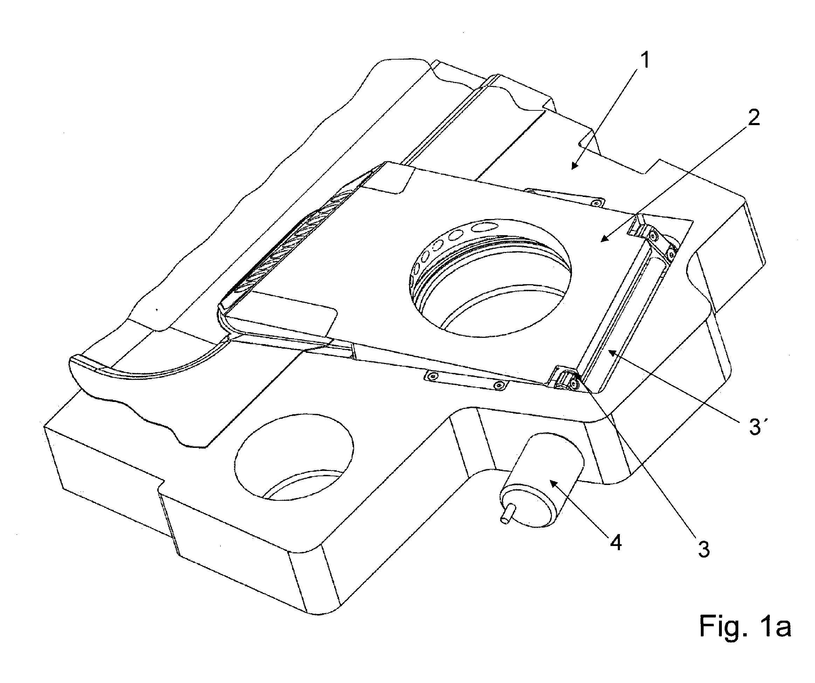

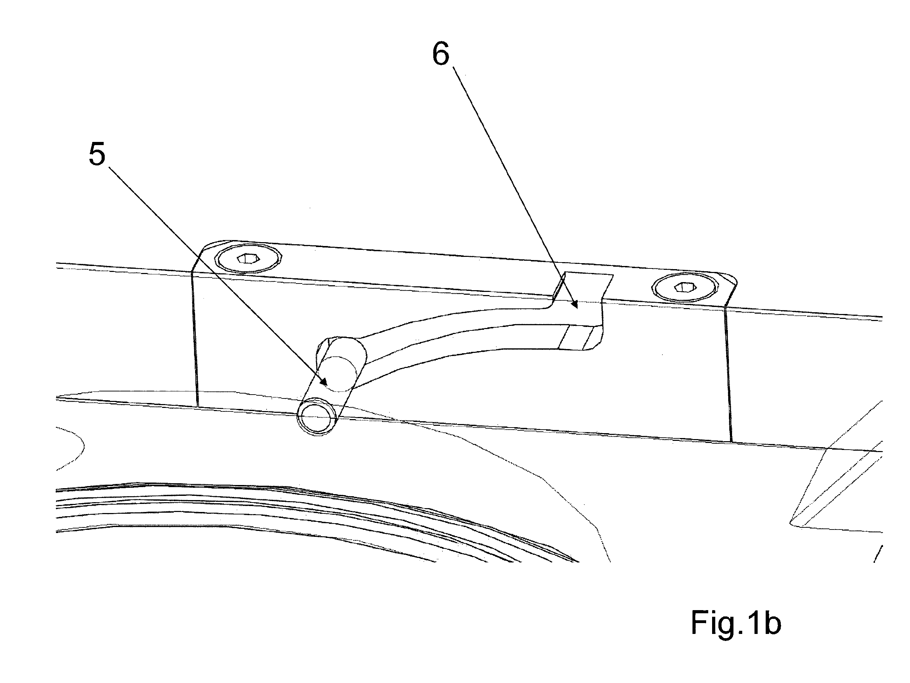

Die Erfindung wird nun anhand der Zeichnungen beispielhaft beschrieben, wobei
Fig. 1 a einen Ausschnitt einer Filterplatte gemäß einer Variante der Erfindung,
Fig. 1 b die Führung des Füllschuhs gemäß einer Variante der Erfindung,
Fig. 2 a einen Ausschnitt einer Filterplatte gemäß einer weiteren Variante der Erfindung,

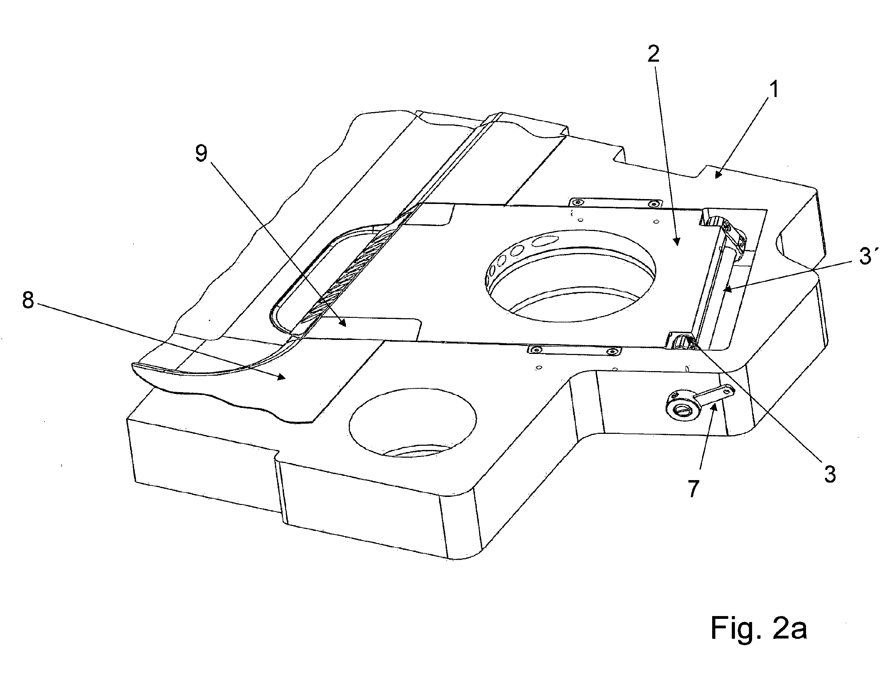

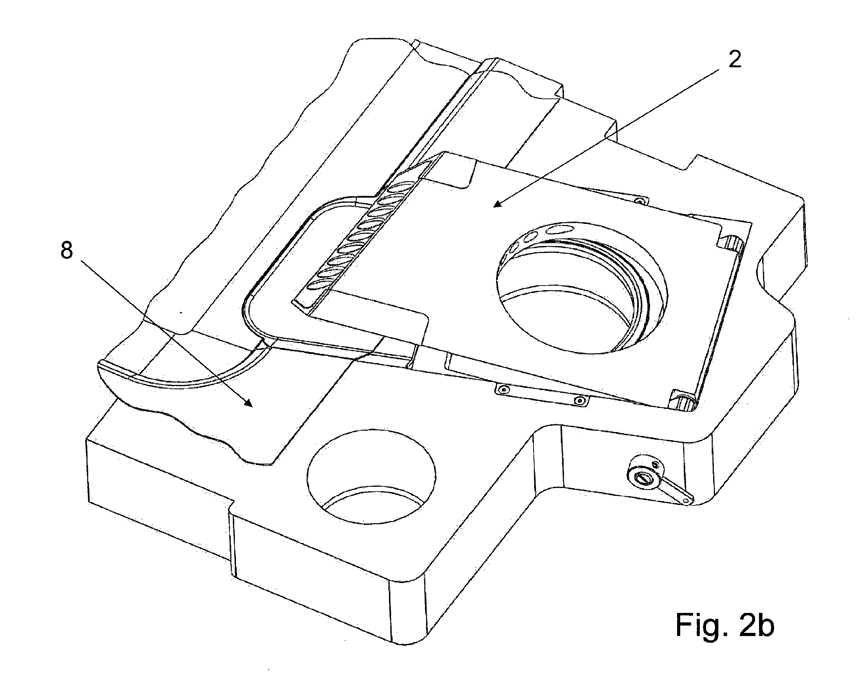

Fig. 2 b einen analogen Ausschnitt zu Fig. 2a mit abgehobenem Füllschuh

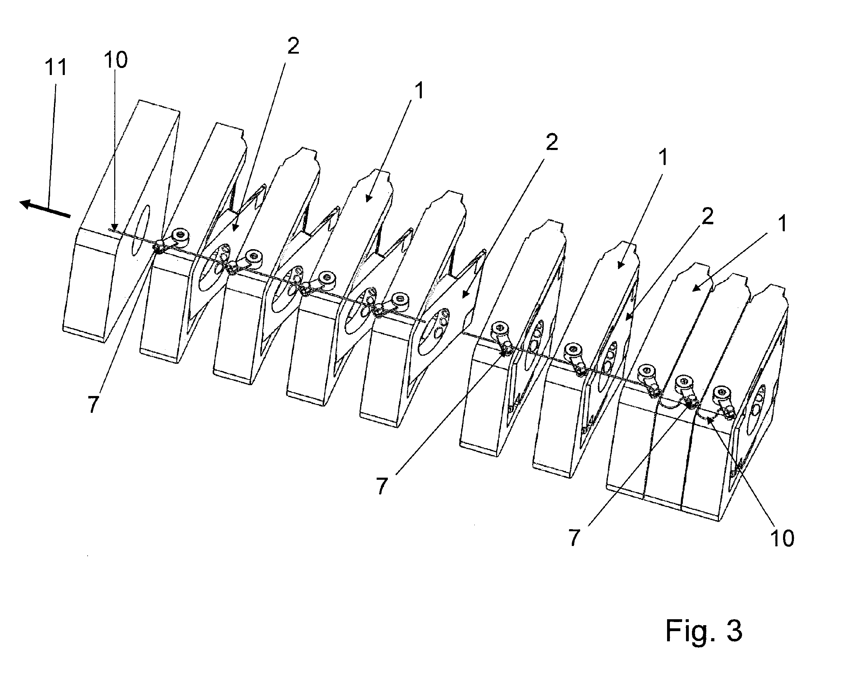

Fig. 3 eine Anordnung mehrerer Füllschuhe bei einer Filtervorrichtung gemäß der Erfindung,

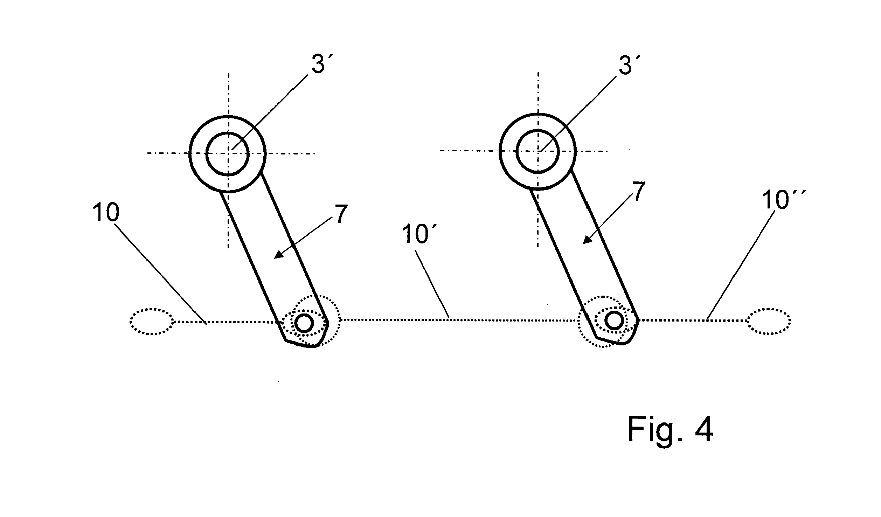

Fig. 4 eine schematische Darstellung der Verbindung der Hebel mehrerer Füllschuhe,

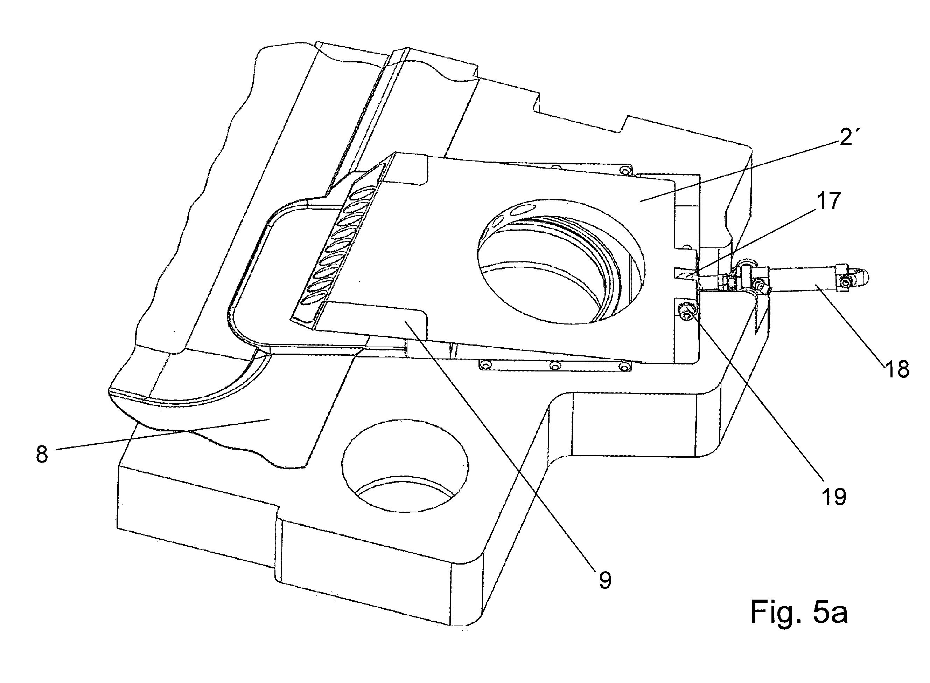

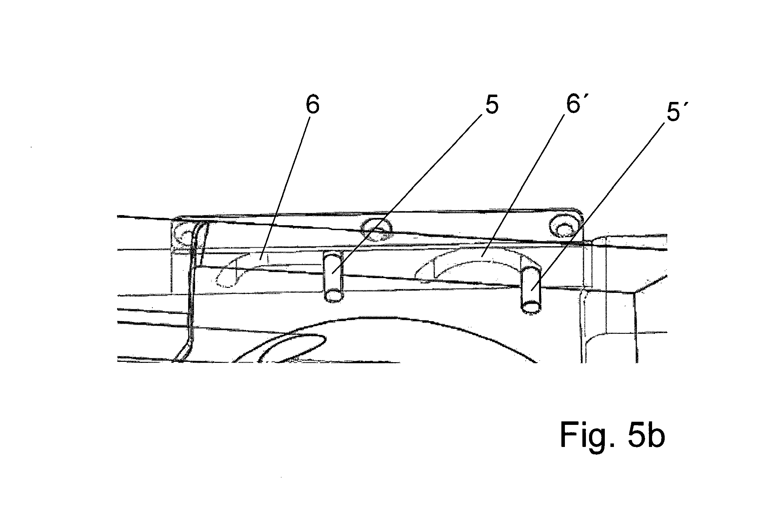

Fig. 5 a eine weitere Variante der Erfindung,
Fig. 5 b die Führung des Füllschuhs gemäß der weiteren Variante der Erfindung

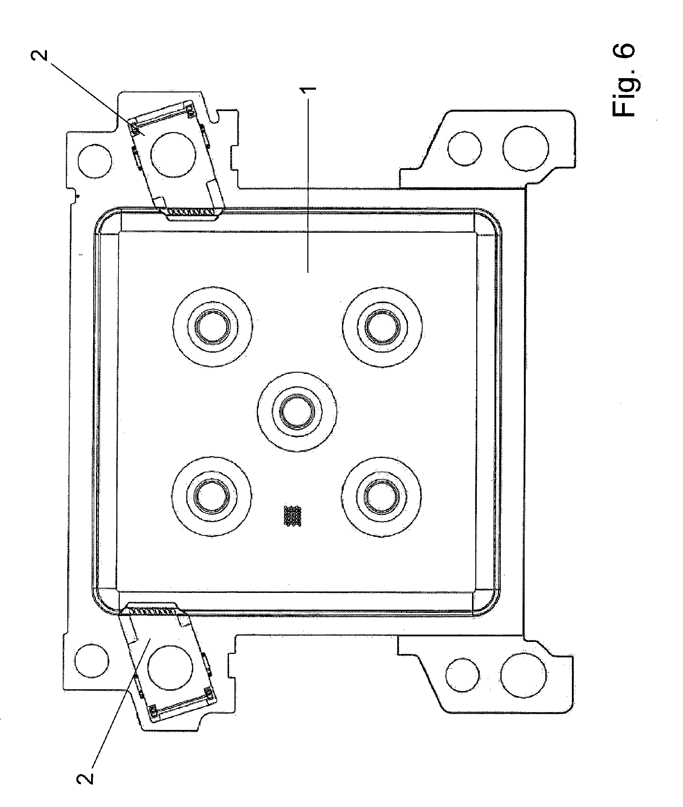

Fig. 6 eine erfindungsgemäße Filterplatte mit Füllschuh und

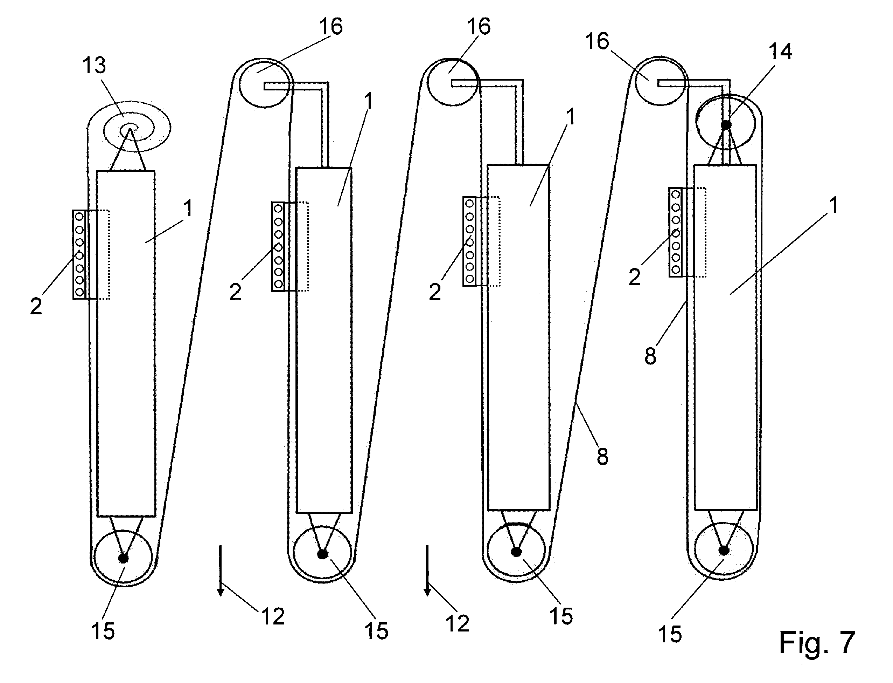

Fig. 7 eine schematische Darstellung der Anordnung der Filterplatten bei einer erfindungsgemäßen Filtervorrichtung
darstellt.

Fig. 1 a zeigt einen Ausschnitt einer Filterplatte 1 mit einem Füllschuh 2 über den während des Betriebs Suspension in eine Filterkammer eingebracht wird. Der Füllschuh 2 ist um eine Achse 3 schwenkbar. Die Schwenkung erfolgt hier mittels eines Stellmotors 4 über die Welle 3' so, dass der Füllschuh 2 von der Filterplatte 1 abgehoben wird. Um ein Verkanten zu vermeiden wird hier ein Stift 5 in einer Kulisse 6 geführt (Fig. 1 b), wodurch der Füllschuh 2 praktisch erst verschoben und dann parallel herausgehoben wird. Dadurch wird auch eine Beschädigung des Filtertuches vermieden. Als Stellmotore 4 können hier elektrische Stellmotore, elektrische oder pneumatische Schrittmotore oder Schwenkmotore eingesetzt werden. Die Motore der einzelnen Füllschuhantriebe werden dann so angesteuert, dass sie nach vollständigem Öffnen der Filtervorrichtung, d.h. vollständigem Auseinanderfahren der Filterplatten 1 die Füllschuhe 2 von den Filterplatten 1 abheben.

Fig. 2 a zeigt eine alternative Variante eines Antriebs für einen Füllschuh 2. Hier ist wieder ein Ausschnitt aus einer Filterplatte (Filterelement) 1 dargestellt, in dem ein Füllschuh 2 über eine Achse 3 dreh- bzw. schwenkbar gelagert ist. Das Abheben des Füllschuhs 2 von der Filterplatte 1 erfolgt mittels eines Hebels 7 über die Welle 3', wobei ein Stift 5 in einer Kulisse 6 (analog Fig. 1 b) geführt wird. Hier ist auch ein Ausschnitt eines Filtertuchs 8 erkennbar, das durch den Füllschuh 2 im Bereich von entsprechenden Dichtungen 9 in der Filterplatte 1 geklemmt wird.

In Fig. 2 b ist dann die Variante gemäß Fig. 2a bei geöffnetem, d.h. abgehobenem Füllschuh 2 dargestellt. In dieser Position kann dann in einfacher Weise das Filtertuch 8 ausgetauscht bzw. weitertransportiert werden.

Fig. 3 zeigt die Anordnung mehrerer Füllschuhe 2, die in Filterplatten 1 (hier nur der Teil dargestellt, in dem der Füllschuh angebracht ist) schwenkbar angeordnet sind. Als Antrieb sind hier wiederum Hebel 7 dargestellt, die beispielsweise mit einem Seilzug 10 verbunden sind. Statt eines Seilzugs 10 kann auch eine Kette oder eine funktionsgleiche Vorrichtung eingesetzt werden. Der Seilzug 10 bzw. die Kette ist so lang, dass die Hebel 7 an den Zwischenelementen beim Öffnen der Filtervorrichtung nicht bewegt werden. Nachdem die Filtervorrichtung, z. B. eine Filterpresse aufgefahren ist, ist der Seilzug 10 leicht gespannt. Eine Zugvorrichtung am Ende des Seilzugs 10 bzw. der Kette wird dann in Richtung 11 bewegt, wodurch auch die alle Hebel 7 praktisch gleichzeitig bewegt werden und dadurch praktisch ebenfalls gleichzeitig alle Füllschuhe 2 von den entsprechenden Filterplatten 1 abgehoben werden. In Fig. 3 sind die verschiedenen Positionen der Filterplatten 1 dargestellt. So ist rechts (drei Elemente) der geschlossene Zustand gezeigt, wobei der Seilzug 10 bzw. die Kette durchhängt. Die nächsten Elemente zeigen den Zustand kurz nach Öffnen der Filtervorrichtung, d.h. der Seilzug 10 ist leicht gespannt und die Füllschuhe 2 befinden sich noch in der Filterplatte 1. Die vier linken Filterplatten 1 zeigen den Zustand nachdem der Seilzug 10 betätigt wurde. Dies ist auch an der Position der Hebel 7 erkennbar. Es ist hier auch gut die vertikale Anordnung der Filterplatten 1 erkennbar. Die Filterplatten 1 können aber auch grundsätzlich horizontal angeordnet werden.

In Fig. 4 ist die Anordnung der Verbindung der einzelnen Hebel 7 von zwei Filterplatten dargestellt. Die Hebel 7 sind dabei mit den Wellen 3' verbunden. Untereinander werden die Hebel 7 mit einem Seilzug 10 verbunden, wobei dieser auch aus Segmenten 10, 10', 10" bestehen kann. Dies hätte den Vorteil, dass jede Filterplatte mit einem Zugseilsegment 10, 10', 10" versehen ist und daher auch einzeln ausgetauscht werden kann. Der segmentweise Aufbau des Zugseils 10 hätte auch den Vorteil, dass das Segment 10, 10', 10" bei einem Bruch leicht ersetzbar ist. Alternativ könnte so ein Segment bei einer Kette aus z.B. drei Kettengliedern bestehen, so dass auch hier erst nach dem Öffnen der Filtervorrichtung (Filterpresse) eine erst leicht gespannte Kette entsteht, die dann durch ein Zugelement vollständig gespannt wird, wodurch die Hebel 7 bewegt und die Füllschuhe 2 von der Filterplatte 1 und dem Filtertuch 8 abgehoben werden.

Fig. 5 a zeigt eine weitere Variante der Erfindung. Die Darstellung zeigt eine Filterplatte 1 mit einem Füllschuh 2', der analog zu Fig. 2 b vom Filtertuch 8 abgehoben ist. Der Füllschuh 2' ist hier über einen Gelenkkopf 17 mit einem doppeltwirkendem Hubzylinder 18 verbunden, der über eine Schwenkbefestigung 19 mit der Filterplatte 1 verbunden ist. Wenn die Kolbenstange des Hubzylinders 18 ausfährt, drückt sie den Füllschuh 2' nach vorne. Wenn die Kolbenstange einfährt, zieht sie den Füllschuh 2' zurück. Fig. 5 b zeigt die Bewegung des Füllschuhs 2', die mittels Stiften 5, 5' durch Kulissen 6, 6' vorgegeben ist. Dadurch hebt der Füllschuh 2' beim Zurückziehen vom Filtertuch 8 ab. Vorteil dieser Variante ist, dass hier keine Achsen, Hebeln oder Federn nötig sind und der Aufbau daher wesentlich einfacher ist. Weiters gibt es Vorteile beim Halten des Füllschuhs 2' in der Vertiefung durch die vorzugsweise pneumatische Kraft des Hubzylinders 18. Es kann natürlich auch ein Hydraulikzylinder verwendet werden.

In Fig. 6 ist beispielhaft eine Filterplatte 1 dargestellt, die hier zwei Füllschuhe 2 aufweist. Die Filterplatte 1 kann natürlich auch anders ausgestaltet sein und je nach Bedarf und eventuell Größe der Filterplatte 1 nur einen Füllschuh 2 oder auch mehrere Füllschuhe 2 aufweisen.

Fig. 7 zeigt eine Filtervorrichtung mit mehreren Filterplatten 1 (einem Filterplattenpaket) in denen sich Füllschuhe 2 befinden. Auf den Filterplatten 1 befindet sich ein Filtertuch 8, das hier als "Endlostuch" ausgeführt ist, d.h. es wird über mehrere Filterplatten 1 geführt. Nach dem Öffnen der Filtervorrichtung, d.h. dem Auseinanderfahren der Filterplatten 1 fällt der Filterkuchen 12 nach unten aus der Filtervorrichtung. Da hierbei die Füllschuhe 2 noch in den Filterplatten 1 eingebettet sind, können diese auch nicht beschädigt werden. In Abhängigkeit der zu filternden Produkte kann das Filtertuch 8 in der Position verbleiben oder aber die Füllschuhe 2 abgehoben werden und das Filtertuch 8 z.B. um eine Filterplattenlänge weiter bewegt werden. Es wird dabei von einer Rolle 13 abgewickelt und auf eine Rolle 14 aufgewickelt. Die Umlenkung erfolgt dabei um am unteren Ende der Filterplatten angeordnete Umlenkrollen 15 bzw. am oberen Ende der Filterplatten angeordnete Umlenkrollen 16. Zur Reinigung des Filtertuches können beispielsweise die unteren Umlenkrollen 15 mit Löchern und einem Anschluss für Waschflüssigkeit versehen sein. Ist das Filtertuch 8 eventuell nach mehreren Transportvorgängen vollständig auf der Rolle 14 aufgewickelt, wird die Transportrichtung umgekehrt und von der Rolle 14 abgewickelt und auf die Rolle 13 aufgewickelt. In Fig. 6 sind vier Filterplatten 1 dargestellt, die zusammen ein Filterpaket bilden. Eine Filtervorrichtung besteht im Allgemeinen aus einer Anzahl derartiger Filterpakete. Die Länge des Filtertuches 8 richtet sich nach Anzahl der Filterplatten pro Filterpaket.

Die Erfindung ist nicht auf die Beispiele beschränkt. So kann z.B. die Orientierung der Filterplatten auch horizontal sein. Wesentlich ist lediglich, dass der Füllschuh bzw. die Füllschuhe erst dann vom Filtertuch abgehoben werden, wenn die Filterplatten auseinandergezogen sind. Anschließend kann dann das Filtertuch bewegt werden. Durch die Verwendung eines Antriebs für die Bewegung des Füllschuhs kann der Zeitpunkt des Abhebens vom Filtertuch so gewählt werden, dass keine Beschädigung des Füllschuhs auftritt und es kann bei entsprechenden zu filtrierenden Produkten auch die Klemmung des Filtertuchs nur nach zwei oder mehreren Filtrationszyklen aufgehoben und das Filtertuch weiter transportiert werden.

## Patentansprüche

1. Filterplatte mit mindestens einem Füllschuh, **dadurch gekennzeichnet, dass** der Füllschuh (2, 2') einen Antrieb (4, 7, 18) aufweist.

2. Filterplatte nach Anspruch 1, **dadurch gekennzeichnet, dass** der Antrieb als Stellmotor (4) oder Stellzylinder (18) ausgebildet ist.

3. Filterplatte nach Anspruch 1, **dadurch gekennzeichnet, dass** der Antrieb als mechanischer Hebel (7) ausgeführt ist.

4. Filtervorrichtung mit einer Filterplatte nach Anspruch 2 oder 3, **dadurch gekennzeichnet, dass** mehrere Filterplatten (1) vorgesehen sind.

5. Filtervorrichtung mit einer Filterplatte nach Anspruch 3, **dadurch gekennzeichnet, dass** die Hebel (7) der Filterplatten (1) mit einem Seilzug, einer Kette oder einer funktionsgleichen Vorrichtung (10, 10') miteinander verbunden sind.

6. Filtervorrichtung nach Anspruch 5, **dadurch gekennzeichnet, dass** der Seilzug bzw. die Kette oder andere funktionsgleiche Vorrichtung (10, 10') an einem Ende mit einer Zugvorrichtung verbunden sind, wobei die Zugvorrichtung vorzugsweise ein Zylinder mit Arbeitsfluid, beispielsweise Pneumatik- oder Hydraulikzylinder ist.

7. Verfahren zum Filtern einer Suspension die durch mindestens einen Füllschuh in mindestens eine Filterkammer, die zwischen einer Filterplatte und einer Gegenplatte einer Filtervorrichtung gebildet ist, eingeleitet wird und auf einem Filtertuch auf der Filterplatte ein Filterkuchen gebildet wird, **dadurch gekennzeichnet, dass** die Filtervorrichtung geöffnet wird, wobei anschließend der mindestens eine Füllschuh (2, 2') mittels des Antriebs (4, 7, 18) vom Filtertuch (8) abgehoben und das Filtertuch (8) weitertransportiert wird.

8. Verfahren nach Anspruch 7, **dadurch gekennzeichnet, dass** die Filtervorrichtung komplett auseinandergezogen und geleert wird und anschließend die Füllschuhe (2, 2') mittels einer Zugvorrichtung gemeinsam vom Filtertuch (8) abgehoben werden, wobei vorzugsweise die Zugvorrichtung entlastet wird, sobald die Tuchbewegung beendet ist.

9. Verfahren nach Anspruch 7 oder 8, **dadurch gekennzeichnet, dass** die Füllschuhe (2, 2') vor dem Schließen der Filtervorrichtung beispielsweise durch eine mechanische Kraft, beispielsweise Feder, Zylinder, Stellmotor, in Richtung Filtertuch geführt werden.

10. Verfahren nach Anspruch 9, **dadurch gekennzeichnet, dass** durch die zufahrenden Filterplatten (1) die Füllschuhe (2, 2') in Vertiefungen gedrückt werden und damit das Filtertuch (8) klemmen.
